# EUROPÄISCHE PATENTSCHRIFT

(11) **EP 1 568 447 B1**
(45) Veröffentlichungstag und Bekanntmachung des Hinweises auf die Patenterteilung: **05.03.2008**
(21) Anmeldenummer: 05001301.0
(22) Anmeldetag: 22.01.2005
(51) Int. Cl.: B25J 15/04

(54) **Schnellwechselvorrichtung mit federbelasteter Sperrklinke für Werkstückgreifer**
Quick coupling device with spring-loaded pawl latch for workpiece gripper
Dispositif d'attache rapide avec cliquet d'arrêt à ressort pour élément de préhension de pièces

(30) Priorität: 26.02.2004 DE 102004009937
(43) Veröffentlichungstag der Anmeldung: 31.08.2005
(73) Patentinhaber: Bilsing Automation GmbH, 57439 Attendorn (DE)
(72) Erfinder: Bilsing, Alfred, 57439 Attendorn (DE)
(74) Vertreter: Erb, Henning

(56) Entgegenhaltungen:
- DE-A1- 2 608 819
- FR-A- 2 576 236

## Beschreibung

Die vorliegende Erfindung befaßt sich mit einer Schnellwechselvorrichtung zur Festlegung wenigstens eines Werkstückgreifers an einer Handhabungseinrichtung in automatisierten Fertigungsanlagen mit einem Verriegelungselement zum formschlüssigen Arretieren eines Anschlußteils des Werkstückgreifers in seiner Arbeitsstellung.

Vorrichtungen, die ein schnelles Wechseln von für bestimmte Werkstücke vorgesehenen Werkstückgreifern, ermöglichen, werden benötigt, um die Werkstückgreifer auf Transferpressen oder bei Industrierobotern schnell wechseln und damit bei sehr kurzen Umrüstzeiten eine Produktionsanlage auf die Fertigung eines anderen Teils umstellen zu können. Bei größeren und schwereren Teilen können diese Werkstückgreifer sehr komplex sein und auch ein erhebliches Eigengewicht aufweisen, so daß ihre Handhabung durch den Monteur nach dem Lösen der Vorrichtung bzw. vor dem Verriegeln in der Vorrichtung nicht ganz einfach ist. Bei den bekannten Vorrichtungen besteht das Problem, daß der Werkstückgreifer nach dem Lösen von der Vorrichtung nicht mehr gesichert ist, dem Monteur aber nur eine Hand zur Verfügung steht, weil er mit der anderen Hand noch mit dem Entriegeln der Vorrichtung beschäftigt ist.

Eine Vorrichtung der eingangs genannten Art ist aus der DE 197 21 824 A1 bekannt, während die DE 34 33 311 C2 eine Schnellwechselkupplung beschreibt, die ein federbelastetes Verriegelungselement aufweist, das durch eine Kulisse lösbar ist.

Aus der FR-A-2 576 236 und der DE-A-2 608 819 sind weitere Schnellwechselvorrichtungen bekannt, die federbelastete Verriegelungselemente aufweisen.

Die Aufgabe der vorliegenden Erfindung besteht darin, eine Vorrichtung zu schaffen, die ein Lösen eines Werkstückgreifers von einer Handhabungseinrichtung vereinfacht.

Erfindungsgemäß wird die Aufgabe durch eine Vorrichtung der eingangs beschriebenen Art gelöst, bei welcher das Verriegelungselement eine federbelastete Sperrklinke ist, die beim Einschieben des Anschlußteils in eine Aufnahme zum Halten des Anschlußteils selbsttätig verrastet, und ein Entriegelungselement vorgesehen ist, das beim Betätigen die Sperrklinke ausrückt und das Anschlußteil axial in der Aufnahme verlagert.

Die erfindungsgemäße Vorrichtung bietet den Vorteil, daß mit einem Entriegelungselement zum einen die Sperrklinke aus ihrer Verraststellung ausgerückt werden kann und im gleichen Bewegungsablauf nach dem Ausrücken der Sperrklinke das Anschlußteil in der Aufnahme verlagert wird, so daß die Sperrklinke nach dem Loslassen des Entriegelungselements nicht wieder in ihre Arretierstellung zurückschnappen kann. Gleichzeitig bleibt der Werkstückgreifer durch das noch in der Aufnahme befindliche Anschlußteil an der Vorrichtung gehalten, so daß der Monteur anschließend den Werkstückgreifer mit beiden Händen greifen und sicher von der Vorrichtung abnehmen kann.

Gleichzeitig erleichtert die Vorrichtung das Festlegen des Werkstückgreifers an der Vorrichtung, da dieses lediglich in die Aufnahme geschoben werden muß und durch das Einschnappen der Sperrklinke automatisch in der Arbeitsstellung verrastet wird. Vorzugsweise zentriert die Aufnahme das Anschlußteil beim Einschieben in die Arbeitsstellung.

Vorzugsweise wirkt das Entriegelungselement weiterhin auf einen an der Sperrklinke vorgesehenen Schwenkarm, wobei das Entriegelungselement in einer weiteren bevorzugten Ausführungsform der Erfindung schwenkbar in der Vorrichtung gelagert ist. Grundsätzlich könnte auch ein linear verschieblich gelagertes Entriegelungselement vorgesehen sein, das allerdings baulich mehr Raum benötigt.

Das Entriegelungselement liegt bevorzugt unmittelbar hinter dem Anschlußteil und besitzt einen Mitnehmer, der auf den Entriegelungsarm, und eine Druckflanke, die auf das Rohrende des Anschlußteils wirkt. Die Geometrie ist dabei so gewählt, daß der Mitnehmer die Sperrklinke unmittelbar nach dem Betätigen des Entriegelungselements ausrückt und die Druckflanke erst nach dem Ausrücken der Sperrklinke in Anlage an das Rohrende gelangt, um anschließend bei einem Weiterdrehen oder, bei einem linear verschieblichen Einsteckelement, Weiterschieben das Anschlußteil zu verlagern. Eine andere Variante kann vorsehen, das Anschlußteil in der Aufnahme zu verdrehen, nachdem die Sperrklinke ausgerückt worden ist.

Um eine zusätzliche Sicherheit gegen ein Ausrücken der Sperrklinke im Betrieb zu erhalten, ist eine Ausführungsform besonders bevorzugt, bei welcher die Sperrklinke mit Hilfe eines Sicherungselements in der eingerasteten Arbeitsstellung fixierbar ist. Dieses Sicherungselement kann beispielsweise aus einem Stift bestehen, der in eine Bohrung der Sperrklinke einrückbar ist und dadurch ein unbeabsichtigtes Verschwenken wirksam verhindert.

In einer weiteren bevorzugten Ausführungsform der Erfindung ist vorgesehen, daß an ihr zwei in Flucht liegende Anschlußteile eines Werkstückgreifers festlegbar sind. Während bislang oft durchgängige, einstückige Anschlußteile umständlich an beispielsweise einer Adapterplatte eines Roboters festgelegt werden mußten, ergeben sich durch die geteilte Anordnung mit zwei Anschlußteilen Handhabungsvorteile, da der Werkstückgreifer nunmehr leicht in getrennten Schritten von der Vorrichtung abgenommen werden kann. Hierbei sind entsprechend auch zwei separate Sperrklinken für jedes Anschlußteil vorgesehen, die aber auf einer gemeinsamen Schwenkachse gelagert sein können, wobei die Schwenkrichtungen bezogen auf beispielsweise die Ausrückrichtung entgegengesetzt sein können.

Vorzugsweise ist auch nur ein Entriegelungselement zur wahlweisen Entriegelung beider Sperrklinken und zur Verlagerung des jeweils zugehörigen Anschlußteiles vorgesehen, was sich bei der zuvor erwähnten entgegengesetzten Schwenkrichtung der Schwenkelemente besonders zweckmäßig dadurch realisieren läßt, daß das Entriegelungselement aus einer Mittellage heraus in einer ersten Betätigungsrichtung eine erste Sperrklinke ausrückt und anschließend das zugehörige Anschlußteil verlagert, während es in einer zweiten Betätigungsrichtung die zweite Sperrklinke ausrückt und anschließend das zugehörige zweite Anschlußteil verlagert.

Im Zusammenhang mit einer Ausführungsform mit nur einer Aufnahme ist bereits erwähnt worden, daß die Anordnung des Entriegelungselements als Schwenkelement unmittelbar hinter dem Anschlußteil besonders bevorzugt ist, und auch bei einer Variante mit in Flucht liegenden Aufnahmen ist es besonders bevorzugt, das schwenkbare Entriegelungselement dann zwischen den beiden Anschlußteilen vorzusehen.

Eine noch weitere bevorzugte Ausführungsform sieht vor, daß wenigstens eine weitere Aufnahme für ein Anschlußteil neben einer ersten Aufnahme mit einer weiteren Sperrklinke vorgesehen ist und die jeweiligen Entriegelungselemente für die Sperrklinken der nebeneinander liegenden Aufnahmen über eine Welle drehstarr miteinander gekoppelt sind. Dadurch lassen sich mit einer Schwenkbewegung durch den Bediener zwei nebeneinander liegende Anschlußteile entriegeln, die zu einem einzigen Werkstückgreifer gehören und miteinander gekoppelt oder getrennt ausgebildet sein können. Bei der zuvor erwähnten Ausführung mit in Flucht liegenden Aufnahmen und jeweils parallel dazu vorgesehenen weiteren Aufnahmen ergeben sich somit vier Aufnahmen für vier Anschlußteile, die durch die nacheinander folgende Verdrehung des schwenkbaren Entriegelungselements in den beiden Betätigungsrichtungen entriegelbar sind.

Nachfolgend wird anhand der beigefügten Zeichnungen näher auf ein Ausführungsbeispiel der Erfindung eingegangen. Es zeigen:
- Fig. 1: einen Längsschnitt einer Vorrichtung zum Festlegen eines Werkstückgreifers an einer Adapterplatte;
- Fig. 2: einen Schnitt B-B der Vorrichtung gemäß Fig. 1;
- Fig. 3: eine Draufsicht auf die Vorrichtung gemäß Fig. 1.

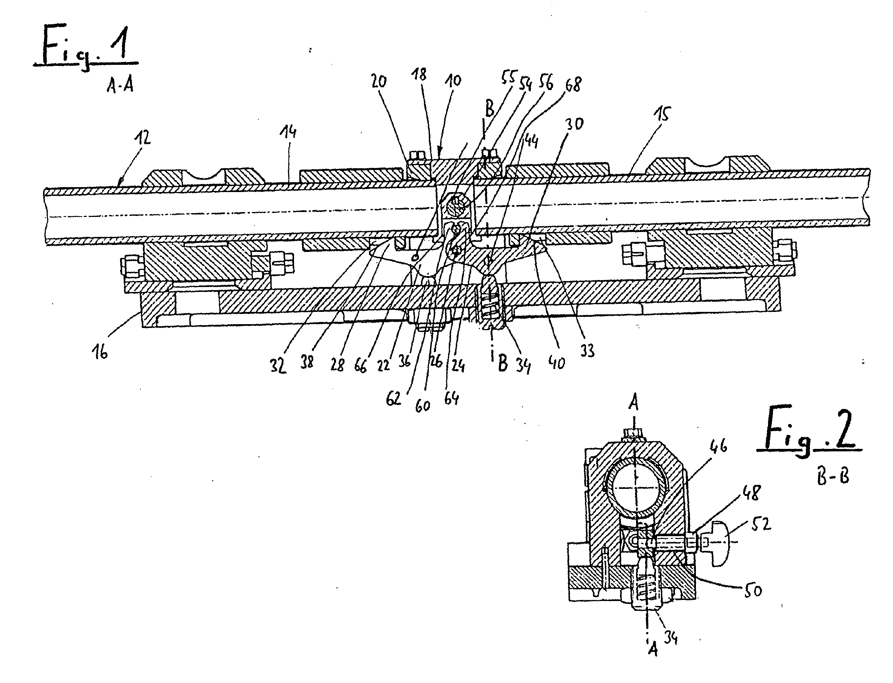

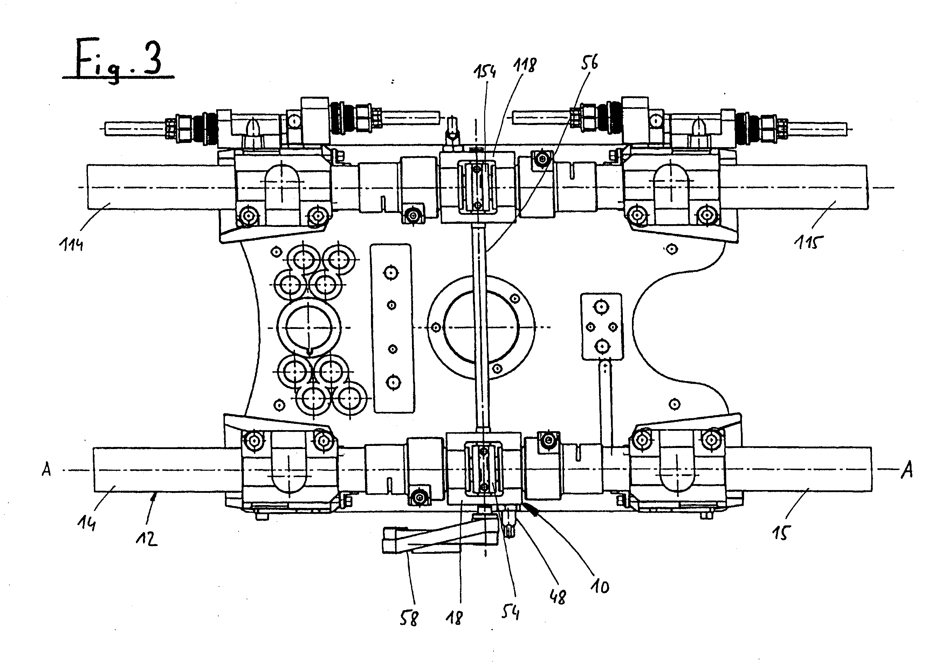

In Fig. 1 ist eine Vorrichtung 10 zum Festlegen eines Werkstückgreifers 12, von welchem nur zwei Paare in Flucht liegender Anschlußteile 14 gezeigt sind (s. auch Fig. 3), an einer Adapterplatte 16 zur Anbringung des Werkstückgreifers 12 an einem Fertigungsroboter. Die als Werkstückgreifer-Schnellwechseleinrichtung ausgebildete Vorrichtung besitzt eine mittig zwischen den beiden Anschlußteilen 14 vorgesehene Aufnahme 18, in welche die rohrförmigen Anschlußteile 14 einsteckbar sind, wobei die Einstecköffnungen am Rand einen Zentrierkonus 20 aufweisen, mit Hilfe derer das Anschlußteil 14 beim Einstecken zentrierbar ist.

In der Aufnahme 18 sind zwei Sperrklinken 22, 24 auf einer gemeinsamen Schwenkachse 26 schwenkbar gelagert, die jeweils über eine Rastnase 28, 30 verfügen, die in eine Ausnehmung 32, 33 an dem jeweiligen Anschlußteil 14, 15 in der gezeigten Arbeitsstellung einrastbar sind. Die Sperrklinken 22, 24 sind mit Hilfe einstellbarer Druckfedern 34, 36, die auf die Sperrklinken 22, 24 wirken, in Richtung der verrasteten Stellung vorbelastet. Die Rastnasen 28, 30 verfügen jeweils über Schrägflächen 38, 40, mit Hilfe derer die Rohrenden der Anschlußteile 14, 15 die Sperrklinken 22, 24 beim Einschieben beiseite drücken können. Die Sperrklinken 22, 24 verfügen jeweils über Bohrungen 42, 44, in die ein Stift 46 (s. Fig. 2) einrückbar ist, um die Sperrklinken 22, 24 in ihrer eingerasteten Stellung zu fixieren. Der Stift 46 ist einstückig mit einem Gewindeschaft 48 ausgebildet, der in ein Innengewinde 50 in der Aufnahme 18 eingedreht und mit Hilfe eines abnehmbaren Griffelements 52 verdrehbar ist, um den Stift 46 in die Bohrung einzurücken oder, zur Freigabe der Sperrklinke, aus dieser herauszudrehen.

Zum Lösen des Werkstückgreifers 12 ist ein Entriegelungselement 54 vorgesehen, das mit Hilfe eines Keils 55 drehstarr mit einer Schwenkwelle 56 verbunden ist (s. auch Fig. 3), die in der Aufnahme 18 schwenkbar gelagert ist. Am Ende der Schwenkwelle 56 ist ein Betätigungshebel 58 vorgesehen.

Das Entriegelungselement 54 besitzt einen Mitnehmer 60, der zwischen zwei Entriegelungsarmen 62, 64 der Sperrklinken 22, 24 in Anlage an diesen angeordnet ist. Ferner verfügt das Entriegelungselement 54 über Druckkanten 66, 68, die zum Zusammenwirken mit jeweils einem Rohrende eines Anschlußteils 14 bzw. 15 vorgesehen sind, worauf später noch näher eingegangen wird.

Aus Fig. 3 ist zu ersehen, daß auf der Adapterplatte 16 zwei parallel zueinander angeordnete Aufnahmen 18, 118 vorgesehen sind, so daß insgesamt vier Anschlußteile 14, 15, 114, 115 mit jeweils einer Sperrklinke (in Fig. 3 nicht gezeigt) an der Adapterplatte 16 festlegbar sind. Entsprechend sind auch zwei Entriegelungselemente 54, 154 vorgesehen, die über die bereits erwähnte Schwenkwelle 56 miteinander drehstarr gekoppelt sind. Auf diese Weise ist es möglich, mit Hilfe des Betätigungshebels 58 gleichzeitig beide Entriegelungselemente 54, 154 zu betätigen.

Wie bereits eingangs erwähnt, werden die Anschlußteile 14, 15, 114, 115 in ihren jeweiligen Aufnahmen 18, 118 durch einfaches Einschieben montiert, wobei sich die Rohrenden an dem jeweiligen Zentrierkonus 20 ausrichten und die Sperrklinken 22, 24 beim Erreichen eines Endanschlages in die Ausnehmungen 32, 33 einrasten.

Zum Lösen der Anschlußteile 14, 15, 114, 115 wird der Betätigungshebel 58 zunächst in eine erste Richtung betätigt. Geschieht dies beispielsweise im Gegenuhrzeigersinn im Sinne der Darstellung gemäß Fig. 1, rückt der Mitnehmer 60 des Entriegelungselements 54 durch Mitnahme des Entriegelungsarmes 64 zunächst die im Sinne der Zeichnung rechts angeordnete Sperrklinke aus der Ausnehmung 32 aus. Bei einem Weiterdrehen gelangt die dem Anschlußteil 15 auf der rechten Seite der Darstellung gemäß Fig. 1 zugeordnete Druckkante 68 in Anlage an das Rohrende und kann somit das Anschlußteil 15 bei einem Weiterdrehen des Hebels 58 bis zu einem Endanschlag um ein bestimmtes axiales Wegstück aus der Aufnahme 18 schieben. Damit gelangt auch die Ausnehmung 33 aus dem Eingriffsbereich der Rastnase 30, so daß bei einem Zurückdrehen des Hebels 58 die Sperrklinke 24 nicht wieder verrasten kann.

Wird der Betätigungshebel 58 nunmehr über die in Fig. 1 gezeigte Mittellage hinaus in der anderen Betätigungsrichtung verschwenkt, vollzieht sich der zuvor beschriebene Entriegelungsvorgang in gleicher Weise auf der im Sinne der Darstellung gemäß Fig. 1 linken Seite, d. h. zunächst wird die Sperrklinke 22 ausgerückt und anschließend verlagert die dort vorgesehene Druckkante 66 des Entriegelungselements 54 das Anschlußteil 14, so daß auch die Sperrklinke 22 nach dem Zurückführen des Betätigungshebels in die Mittelstellung nicht mehr in die Ausnehmung 32 zurückschnappen kann. Selbstverständlich muß vor dem Betätigen des Entriegelungselements 54 eine Freigabe der Sperrklinken durch Entfernen des Sicherungsstiftes 46 aus den Bohrungen 44, 42 erfolgen.

Nach dem Entriegeln verbleiben die Anschlußteile 14, 15 noch in den Aufnahmen, so daß der Werkstückgreifer nicht herausfallen kann. Der Monteur hat nun beide Hände frei, um die jeweiligen Anschlußteile zu greifen, den Werkstückgreifer zu entfernen und ggf. einen neuen Werkstückgreifer in die Aufnahmen 18, 118 einzusetzen.

Die gezeigte Ausführungsform mit dem mittig schwenkbar zwischen den Rohrenden der Anschlußteile 14, 15 vorgesehenen Entriegelungselement ist besonders platzsparend und schränkt die Funktionalität der Adapterplatte mit dem Werkstückgreifer nicht ein, insbesondere wenn der Hebel 58 abnehmbar ist. Grundsätzlich sind aber auch andere Ausführungsformen denkbar, beispielsweise mit einem axial mit Bezug auf die Anschlußteile beweglich gelagerten Entriegelungselement. Denkbar wäre auch, die Anschlußteile zur Aufhebung der Verraststellung um einen bestimmten Winkelbetrag in der Aufnahme zu drehen, sofern dies durch die Ausbildung des Werkstückgreifers möglich ist.

## Patentansprüche

1. Schnellwechselvorrichtung zur Festlegung eines Werkstückgreifers (12) an einer Handhabungseinrichtung (16) in automatisierten Fertigungsanlagen, mit wenigstens einem Verriegelungselement (22, 24) zum formschlüssigen Arretieren wenigstens eines rohrförmigen Anschlußteils (14, 15, 114, 115) des Werkstückgreifers (12) in seiner Arbeitsstellung, **dadurch gekennzeichnet, daß** das Verriegelungselement (22, 24) eine federbelastete Sperrklinke ist, die beim Einschieben des Anschlußteils (14, 15, 114, 115) in eine Aufnahme (18, 118) zum Halten des Anschlußteils (14, 15, 114, 115) selbsttätig verrastet, und ein Entriegelungselement (54) vorgesehen ist, das beim Betätigen die Sperrklinke (22, 24) ausrückt und das Anschlußteil (14, 15, 114, 115) in der Aufnahme (18, 118) verlagert.

2. Vorrichtung nach Anspruch 1, **dadurch gekennzeichnet, daß** die Aufnahme (18, 20) das Anschlußteil (14, 15, 114, 115) beim Einschieben in die Arbeitsstellung zentriert.

3. Vorrichtung nach Anspruch 1 oder 2, **dadurch gekennzeichnet, daß** die Sperrklinke (22, 24) einen Entriegelungsarm (62, 64) aufweist, auf welchen das Entriegelungselement (54, 60) wirkt, wobei vorzugsweise das Entriegelungselement (54) schwenkbar in der Vorrichtung gelagert ist.

4. Vorrichtung nach Anspruch 3, **dadurch gekennzeichnet, daß** das Entriegelungselement (54) unmittelbar hinter dem Anschlußteil (14, 15, 114, 115) liegt und einen Mitnehmer (60), der auf den Entriegelungsarm (62, 64) wirkt, und eine Druckflanke (66, 68) aufweist, die auf das Rohrende des Anschlußteils (14, 15, 114, 115) wirkt.

5. Vorrichtung nach einem der vorhergehenden Ansprüche, **dadurch gekennzeichnet, daß** die Sperrklinke (22, 24) mit Hilfe eines Sicherungselements (46) in der eingerasteten Arbeitsstellung fixierbar ist, wobei vorzugsweise das Sicherungselement einen Stift (46) aufweist, der in eine Bohrung (42, 44) in der Sperrklinke (22, 24) einrückbar ist.

6. Vorrichtung nach einem der vorhergehenden Ansprüche, **dadurch gekennzeichnet, daß** eine vorgespannte Druckfeder (34, 36) über ein Druckelement auf die Sperrklinke (22, 24) wirkt.

7. Vorrichtung nach einem der vorhergehenden Ansprüche, **dadurch gekennzeichnet, daß** an ihr wenigstens zwei jeweils in Flucht liegende Anschlußteile (14, 15, 114, 115) eines Werkstückgreifers (12) festlegbar sind, wobei vorzugsweise für jedes Anschlußteil (14, 15, 114, 115) jeweils eine separate Sperrklinke (22, 24) vorgesehen ist, wobei die Sperrklinken zweier in Flucht liegender Anschlußteile (14, 15; 114, 115) auf einer gemeinsamen Schwenkachse gelagert sind.

8. Vorrichtung nach Anspruch 7, **dadurch gekennzeichnet, daß** ein Entriegelungselement (54) zum Entriegeln beider Sperrklinken (22, 24) und zur axialen Verlagerung der jeweils zugehörigen fluchtenden Anschlußteile (14, 15) vorgesehen ist, wobei vorzugsweise das Entriegelungselement (54) aus einer Mittellage heraus in einer ersten Betätigungsrichtung eine erste Sperrklinke (24) ausrückt und das zugehörige Anschlußteil (15) verlagert und in einer zweiten Betätigungsrichtung die zweite Sperrklinke (22) ausrückt und anschließend das zugehörige zweite Anschlußteil (14) verlagert.

9. Vorrichtung nach Anspruch 8, **dadurch gekennzeichnet, daß** das Entriegelungselement (54) als Schwenkelement zwischen den beiden Anschlußteilen (14, 15) vorgesehen ist.

10. Vorrichtung nach einem der Ansprüche 3 bis 9, **dadurch gekennzeichnet, daß** wenigstens eine weitere Aufnahme (118) für wenigstens ein Anschlußteil (114, 115) neben einer ersten Aufnahme (18) mit zugehöriger Sperrklinke vorgesehen ist und zugeordnete Entriegelungselemente (54, 154) über eine Welle (56) drehstarr miteinander gekoppelt sind.

## Claims

1. A quick-change device for locating a workpiece gripper (12) in a handling device (16) in automated production facilities, with at least one locking element (22,24) for the form-locking location of at least one tubular connecting member (14,15,114,115) of the workpiece gripper (12) in its operative position, **characterised in that** the locking element (22,24) is a spring-loaded locking pawl which engages automatically when the connecting member (14,15,114,115) is pushed into a socket (18,118) for retaining the connecting member (14,15,114,115), and a disengaging element (54) is provided, which disengages the locking pawl (22,24) when it is actuated and shifts the connecting member (14,15,114,115) in the socket (18,118).

2. A device according to Claim 1, **characterised in that** the socket (18,20) centres the connecting member (14,15,114,115) when it is pushed into the operative position.

3. A device according to Claim 1 or 2, **characterised in that** the locking pawl (22,24) has a disengaging arm (62,64) on which the disengaging element (54) acts, wherein the disengaging element (54) is preferably pivotably mounted in the device.

4. A device according to Claim 3, **characterised in that** the disengaging element (54) is situated immediately behind the connecting member (14,15,114,115) and has a driver (60) which acts on the disengaging arm (62,64) and has a pressure flank (66,68) which acts on the tube end of the connecting member (14,15,114,115).

5. A device according to any one of the preceding Claims, **characterised in that** the locking pawl (22,24) can be located in the engaged operative position by means of a retaining element (46), wherein the retaining element preferably has a pin (46) which can engage in a bore (42,44) in the locking pawl (22,24).

6. A device according to any one of the preceding Claims, **characterised in that** a preloaded compression spring (34,36) acts on the locking pawl (22,24) via a compression element.

7. A device according to any one of the preceding Claims, **characterised in that** at least two respectively aligned connecting members (14,15,114,115) of a workpiece gripper (12) can be located on it, wherein preferably for each connecting member (14,15,114,115) there is respectively provided a separate locking pawl (22,24), wherein the locking pawls of two aligned connecting members (14,15,114,115) are mounted on a common pivot axis.

8. A device according to Claim 7, **characterised in that** the disengaging element (54) is provided to disengage both locking pawls (22,24) and to shift axially the respective associated aligned connecting members (14,15), wherein preferably the disengaging element (54) releases a first locking pawl (24) from a central position in a first actuating position and shifts the associated connecting member (15), and in a second actuating direction it releases the second locking pawl (22) and subsequently shifts the associated connecting member (14).

9. A device according to Claim 8, **characterised in that** the disengaging element (54) is provided as a pivot element between the two connecting members (14,15).

10. A device according to any one of Claims 3 to 9, **characterised in that** at least one further socket (118) for at least one connecting member (114,115) is provided in addition to a first socket (18) with an associated locking pawl, and associated disengaging elements (54,154) are rigidly coupled to one another via a shaft (56).

## Revendications

1. Dispositif d'attache rapide pour fixer un élément de préhension de pièces (12) à une installation de manutention (16) dans des installations de fabrication automatisée, comprenant au moins un élément de verrouillage (22, 24) pour le blocage par une liaison de forme d'au moins une pièce de raccordement (14, 15, 114, 115) tubulaire de l'élément de préhension de pièces (12) dans sa position de travail,
**caractérisé en ce que**
l'élément de verrouillage (22, 24) est un cliquet d'arrêt à ressort qui, lorsqu'on engage la pièce de raccordement (14, 15, 114, 115) dans un logement (18, 118) pour fixer la pièce de raccordement (14, 15, 114, 115) celle-ci s'accroche automatiquement et un élément de déverrouillage (54) est prévu qui, actionné, dégage le cliquet d'arrêt (22, 24) et déplace la pièce de raccordement (14, 15, 114, 115) dans le logement (18, 118).

2. Dispositif selon la revendication 1,
**caractérisé en ce que**
le logement (18, 20) assure le centrage de la pièce de raccordement (14, 15, 114, 115) lorsque celle-ci est engagée en position de travail.

3. Dispositif selon la revendication 1 ou 2,
**caractérisé en ce que**
le verrou (22, 24) comporte un bras de déverrouillage (62, 64) sur lequel agit l'élément de déverrouillage (54, 60) et de préférence l'élément de déverrouillage (54) est monté pivotant dans le dispositif.

4. Dispositif selon la revendication 3,
**caractérisé en ce que**
l'élément de déverrouillage (54) se situe directement derrière la pièce de raccordement (14, 15, 114, 115) et comporte un organe d'entraînement (60) agissant sur le bras de déverrouillage (62, 64) ainsi qu'un flanc de poussée (66, 68) qui agit sur l'extrémité tubulaire de la pièce de raccordement (14, 15, 114, 115).

5. Dispositif selon l'une des revendications précédentes,
**caractérisé en ce que**
le cliquet d'arrêt (22, 24) est bloqué dans sa position de travail, encliqueté à l'aide d'un élément de fixation (46) qui de préférence, comporte une broche (46) s'engageant dans un perçage (42, 44) du cliquet d'arrêt (22, 24).

6. Dispositif selon l'une des revendications précédentes,
**caractérisé en ce qu'**
un ressort de compression précontraint (34, 36) agit par l'intermédiaire d'un élément de poussée sur le cliquet d'arrêt (22, 24).

7. Dispositif selon l'une des revendications précédentes,
**caractérisé en ce qu'**
au moins deux pièces de raccordement (14, 15, 114, 115) alignées faisant partie d'un élément de préhension de pièces (12) peuvent être fixées au dispositif et de préférence pour chaque pièce de raccordement (14, 15, 114, 115) il est prévu un cliquet d'arrêt (22, 24) distinct, respectif, et les cliquets d'arrêt de deux pièces de raccordement (14, 15, 114, 115) alignées sont installés sur un axe de pivotement commun.

8. Dispositif selon la revendication 7,
**caractérisé par**
un élément de déverrouillage (54) pour déverrouiller les deux cliquets d'arrêt (22, 24) et pour déplacer axialement les pièces de raccordement (14, 15) chaque fois alignées, et de préférence l'élément de déverrouillage (54) dégage un premier cliquet d'arrêt (24) de sa position centrale dans une première direction d'actionnement et déplace la pièce de raccordement (15) correspondante et dans une seconde direction d'actionnement, cet élément de déverrouillage dégage le second cliquet d'arrêt (22) et déplace ensuite la seconde pièce de raccordement (14).

9. Dispositif selon la revendication 8,
**caractérisé en ce que**
l'élément de déverrouillage (54) est prévu comme élément pivotant entre les deux pièces de raccordement (14, 15).

10. Dispositif selon l'une des revendications 3 à 9,
**caractérisé en ce qu'**
au moins un autre logement (118) pour au moins une pièce de raccordement (114, 115) est prévu à côté d'un premier logement (18) avec un cliquet d'arrêt correspondant et les éléments de déverrouillage (54, 154) correspondants sont couplés rigidement en rotation l'un à l'autre par un arbre (56).
